# EUROPEAN PATENT APPLICATION

(11) **EP 2 169 515 A1**
(43) Date of publication of application: **31.03.2010**
(21) Application number: 08165205.9
(22) Date of filing: 26.09.2008
(51) Int. Cl.: G06F 3/01

(54) **Portable electronic device comprising tactile touch screen and method of controlling the portable electronic device**

(71) Applicant: Research In Motion Limited, Waterloo, Ontario N2L 3W8 (CA)
(72) Inventor: Ma, ZhongMing, Waterloo Ontario N2V 2A3 (CA)
(74) Representative: Rickard, David John

(57) **Abstract**

A touch screen display unit includes a base, a touch-sensitive display and an actuating arrangement. The touch-sensitive display includes a display device and a touch-sensitive overlay connected to a controller and disposed on the display device for detecting a touch event thereon. The touch-sensitive display is connected to and moveable relative to the base. The actuating arrangement includes a magnetic field applicator for controlling application of a magnetic field and a magnetostrictive member for changing shape in the magnetic field for movement of the touch-sensitive display relative to the base in response to detection of the touch event.

## Description

The present disclosure relates generally to portable electronic devices that include touch screen displays and the provision of tactile feedback for such touch screen displays.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Devices such as PDAs or smart telephones are generally intended for handheld use and ease of portability. Smaller devices are generally desirable for portability. Touch screen devices constructed of a display, such as a liquid crystal display, with a touch-sensitive overlay are useful on such handheld devices as such handheld devices are small and are therefore limited in space available for user input and output devices. Further, the screen content on the touch screen devices can be modified depending on the functions and operations being performed.

Touch screen input/output devices suffer from inherent disadvantages relating to user interaction and response. In particular, such touch screen devices fail to provide a user-desirable tactile quality for positively indicating input, providing a poor user-experience. As a result, errors may be made in selecting features on the touch screen device such as double entry during selection as a result of a lack of touch feedback.

Improvements in touch screen devices are therefore desirable.

### GENERAL

According to one aspect, there may be provided a touch screen display unit. The touch screen display unit includes a base, a touch-sensitive display and an actuating arrangement. The touch-sensitive display may comprise a display device and a touch-sensitive overlay connected to a controller and disposed on the display device for detecting a touch event thereon. The touch-sensitive display may be connected to and moveable relative to the base. The actuating arrangement may comprise a magnetic field applicator for controlling application of a magnetic field and a magnetostrictive member for changing shape in the magnetic field for movement of the touch-sensitive display relative to the base in response to detection of the touch event.

According to another aspect, there may be provided a portable electronic device that includes a base, a touch-sensitive display, an actuating arrangement and operational components. The touch-sensitive display may comprise a display device and a touch-sensitive overlay connected to a controller and disposed on the display device for detecting a touch event thereon. The touch-sensitive display may be connected to and moveable relative to the base. The actuating arrangement may be disposed between the touch-sensitive display and the base, and includes a magnetic field applicator for controlling application of a magnetic field and a magnetostrictive member for changing shape in the magnetic field for movement of the touch-sensitive display relative to the base. The operational components may comprise a processor connected to the controller and to the magnetic field applicator for controlling application of said magnetic field based on the touch event.

According to yet another aspect, there may be provided a method of controlling the portable electronic device. The method may comprise detecting a touch event at the touch-sensitive display and applying a voltage to the magnetic field applicator for application of the magnetic field to the magnetostrictive member to cause movement of the touch screen display relative to the base.

According to still another aspect, there may be provided a computer-readable medium having computer-readable code embodied therein for execution by the processor in the portable electronic device for detecting a touch event at the touch-sensitive display, and applying voltage to the magnetic field applicator for application of the magnetic field to the magnetostrictive member to cause movement of the touch screen display relative to the base.

Advantageously, the magnetic field applicator can be controlled for controlling the magnetic field on the magnetostrictive member, thereby controlling the tactile feedback at the touch screen display. The magnetic field applicator can be an electromagnetic induction coil. A voltage can be applied to the electromagnetic induction coil for generating a moving magnetic field causing elongation of the magnetostrictive member and contraction when the magnetic field is removed by removing the applied voltage. The magnetostrictive member thereby changes in length and applies a force to the touch screen display, causing movement of the display. The motion generated by the magnetostrictive member is proportional to the magnetic field provided by the coil, which is a function of the electrical current through the coil. Thus, the movement of the touch screen display can be closely controlled by the processor of the portable electronic device, which controls the applied voltage.

The movement of the touch screen may be controlled such that touching the touch-sensitive display at an area that does not correspond to a virtual button or feature on the touch screen, for example, does not result in provision of tactile feedback while touching the touch-sensitive display at an area that corresponds to a virtual button or feature results in provision of such tactile feedback. Further still, the tactile feedback can be controlled such that different feedback is provided for different user-selectable features on the touch-sensitive display or for different areas of the touch-sensitive display, for example.

The actuating arrangement with the induction coil and the magnetostrictive member allows for a very quick response time for desired and controlled movement of the touch-sensitive display, thereby providing desirable tactile feedback in response to a touch event on the touch-sensitive display.

### BRIEF DESCRIPTION OF THE DRAWINGS

Embodiments of the present disclosure will now be described, by way of example only, with reference to the attached Figures, wherein:

Figure 1 is a simplified block diagram of components including internal components of a portable electronic device according an aspect of an embodiment;

Figure 2 is a front view of an exemplary portable electronic device in a landscape orientation, showing hidden detail in ghost outline;

Figure 3 is a side view of portions of the portable electronic device including a touch screen display unit;

Figure 4 is a perspective view of an actuating arrangement of the portable electronic device of Figure 3, drawn to a larger scale;

Figure 5 is a flow chart illustrating a method of controlling a portable electronic device including a touch screen display unit.

Figure 6 is a front view of another exemplary portable electronic device in a landscape orientation, showing hidden detail in ghost outline;

Figure 7 is a front view of yet another exemplary portable electronic device in a landscape orientation, showing hidden detail in ghost outline;

Figure 8 is a front view of a still another exemplary portable electronic device in a landscape orientation, showing hidden detail in ghost outline; and

Figures 9A to 9C are perspective views of actuating arrangements of the portable electronic device, similar to Figure 4, including respective permanent magnets.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

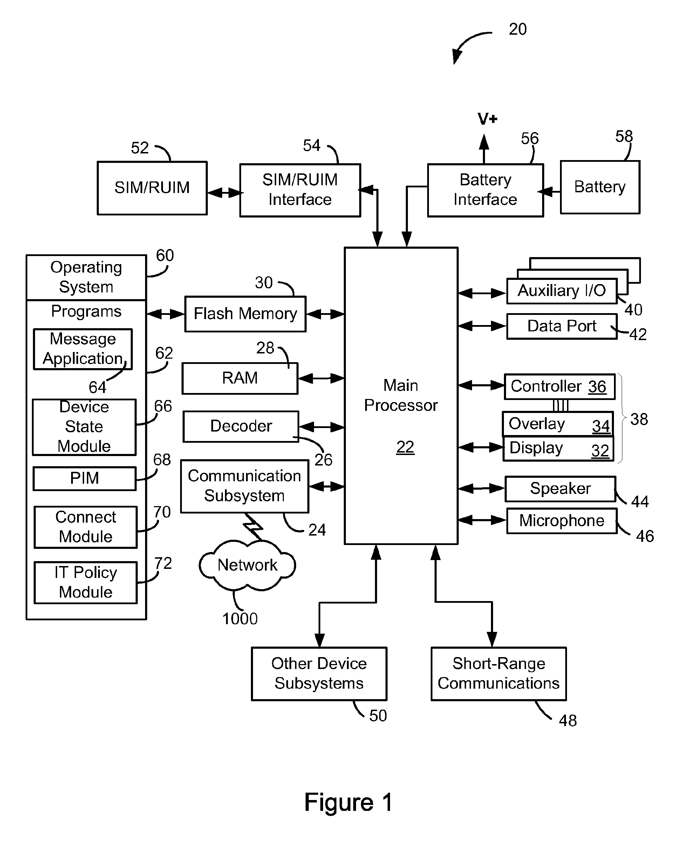

Referring to Figure 1, there is shown therein a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 1000. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 24 with the wireless network 1000 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 1000 associated with the portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The processor 22 also interacts with additional subsystems such as a Random Access Memory (RAM) 28, a flash memory 30, a display 32 with a touch-sensitive overlay 34 connected to an electronic controller 36 that together make up a touch-sensitive display 38, an auxiliary input/output (I/O) subsystem 40, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 1000, and device-resident functions such as a calculator or task list.

The portable electronic device 20 can send and receive communication signals over the wireless network 1000 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 1000. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 1000 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 to 72 which are described in more detail below. The operating system 60 and the software components 62 to 72 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62 to 72, such as specific device applications, or parts thereof, may be temporarily loaded into a volatile store such as the RAM 28. Other software components can also be included, as is well known to those skilled in the art.

The subset of software applications 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. A PIM application has the ability to send and receive data items via the wireless network 1000. PIM data items may be seamlessly integrated, synchronized, and updated via the wireless network 1000 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set ofAPls that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 1000, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 1000. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 40. A subscriber may also compose data items, such as e-mail messages, for example, using the touch-sensitive overlay 34 on the display 32 that are part of the touch-sensitive display 38, and possibly the auxiliary I/O subsystem 40. The auxiliary subsystem 40 may include devices such as: a mouse, track ball, infrared fingerprint detector, or a roller wheel with dynamic button pressing capability. A composed item may be transmitted over the wireless network 1000 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

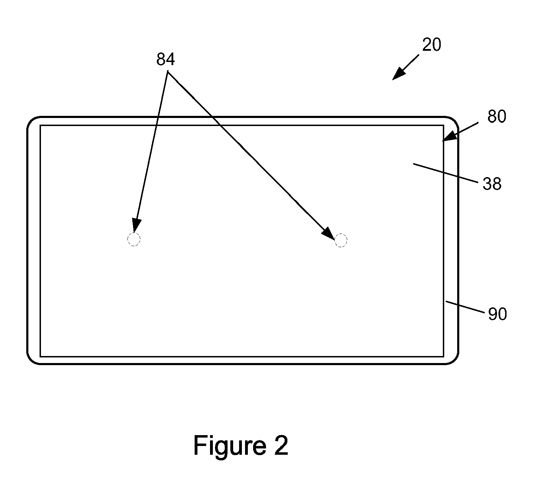

Reference is now made to Figures 2, 3, and 4 to describe a portable electronic device 20 that includes a touch screen display unit. The touch screen display unit is generally indicated by the numeral 80 and includes a base 82, the touch-sensitive display 38 and an actuating arrangement 84. The touch-sensitive display 38 includes the display device 32 and the touch-sensitive overlay 34 connected to the controller 36 and disposed on the display device 32 for detecting a touch event thereon. The touch-sensitive display 38 is connected to and moveable relative to the base 82. The actuating arrangement 84 includes a magnetic field applicator 86 for controlling application of a magnetic field and a magnetostrictive member 88 for changing shape in the magnetic field for movement of the touch-sensitive display 38 relative to the base 82 in response to detection of the touch event.

A front view of an exemplary portable electronic device 20 in portrait orientation is shown in Figure 2. The portable electronic device 20 includes a housing 90 that houses the internal components that are shown in Figure 1 and frames the touch-sensitive display 38 such that the touch-sensitive display 38 is exposed for user-interaction therewith when the portable electronic device 20 is in use. It will be appreciated that the touch-sensitive display 38 can include any suitable number of user-selectable features when in use, for example, in the form of virtual buttons for user-selection of applications, options, or keys of a keyboard for user entry of data during operation of the portable electronic device 20.

The touch-sensitive display 38 can be any suitable touch screen display such as a capacitive touch screen display. A capacitive touch-sensitive display 38 includes the display 32 and the touch-sensitive overlay 34, as shown in Figure 1, in the form of a capacitive touch-sensitive overlay 34. It will be appreciated that the capacitive touch-sensitive overlay 34 includes a number of layers in a stack and is fixed to the display 32 via a suitable optically clear adhesive. The layers can include, for example a substrate fixed to the LCD display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

In the capacitive touch-sensitive overlay example, the X and Y location of a touch event can both be determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 (shown in Figure 1) as a result of capacitive coupling with a suitable object such as a finger of a user or a conductive object held in a bare hand of a user resulting in a change in the electric field of each of the touch sensor layers. The signals represent the respective X and Y touch location values. It will be appreciated that other attributes of the user's touch on the touch-sensitive display 38 can be determined. For example, the size and the shape of the touch on the touch-sensitive display 38 can be determined in addition to the location (X and Y values) based on the signals received at the controller 36 from the touch sensor layers.

Referring still to Figure 2, it will be appreciated that a user's touch on the touch-sensitive display 38 is determined by determining the X and Y touch location and user-selected input is determined based on the X and Y touch location and the application executed by the processor 22. Thus a feature or virtual button displayed on the touch-sensitive display 38 may be selected by matching the feature or button to the X and Y location of a touch event on the touch-sensitive display 38. A feature or button selected by the user is determined based on the X and Y touch location and based on the application.

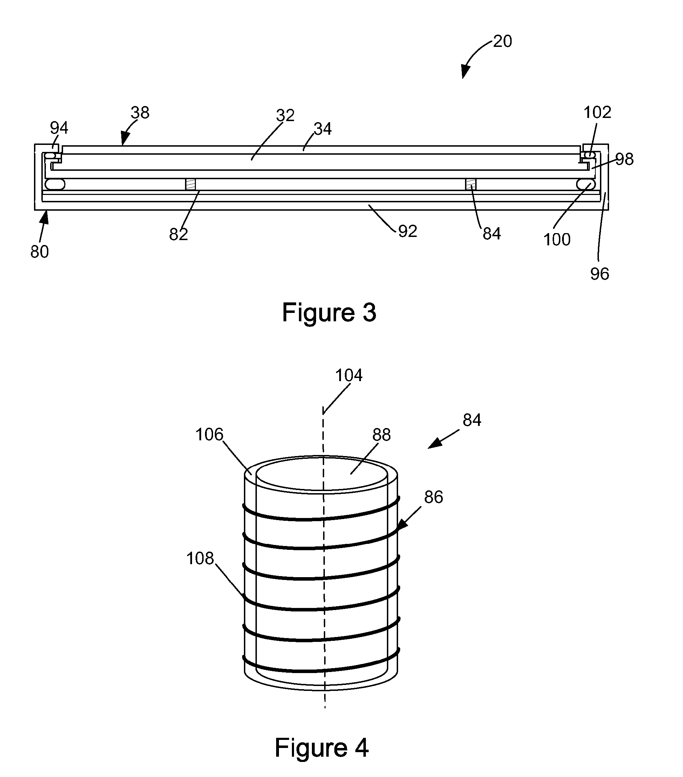

Reference is now made to Figures 3 and 4 in addition to Figure 2 to describe an exemplary touch screen display unit 80. As described, Figure 3 is a sectional side view of portions of the exemplary portable electronic device 20 including the touch screen display unit 80, showing hidden detail, including the actuating arrangement 84. Figure 4 is a perspective view of an actuating arrangement of the portable electronic device of Figure 3, drawn to a larger scale. The portable electronic device 20 includes the housing 90 (Figure 2), which houses the components therein. In the present exemplary embodiment, the base 82 is a printed circuit board that extends within the housing 90, generally parallel to the touch-sensitive display 38. The printed circuit board provides the base 82 for the actuating arrangement 84 and provides mechanical support and electrical connection for electronic components for the portable electronic device 20. In the present example, the actuating arrangement 84 is supported on one side of the printed circuit board while the opposing side provides mechanical support and electrical connection for other components of the portable electronic device 20.

In the present embodiment, the housing includes a back 92, and a frame 94, spaced from the back 92, that frames the touch-sensitive display 38. Sidewalls 96 extend generally perpendicularly to the back 92, between the back 92 and the frame 94. The back 92 can include a plate (not shown) that is releasably attached for insertion and removal of, for example, the battery 58 and the SIM card 52 described above with reference to Figure 1. It will be appreciated that the back 92 can be injection molded, for example. The frame 94 is sized and shaped to frame a window in which the touch-sensitive display 38 is exposed for input and for displaying output.

The display device 32 and the overlay 34 are supported on a support tray 98 of suitable material such as magnesium for providing mechanical support to the display device 32 and overlay 34. The display device 32 and overlay 34 are biased away from the back 92, toward the frame 94 by biasing elements 100 such as gel pads between the support tray 98 and the base 82. Compliant spacers 102, which can also be in the form of gel pads for example, are located between an upper portion of the support tray 98 and the frame 94. The touch-sensitive display 38 is moveable within the housing 90 as the touch-sensitive display can be moved away from the base 82, thereby compressing the compliant spacers 102. The touch-sensitive display 38 can also be pivoted within the housing 90 with one side of the touch-sensitive display 38 moving away from the base 82.

The actuating arrangement 84 is located between the base 82 and the support tray 98 for providing tactile feedback for the touch-sensitive display 38. The actuating arrangement 84 includes a magnetostrictive member 88 in the form of a rod of magnetostrictive material. The rod can be Terfenol - D, an alloy of terbium, Tb (0.3), dysprosium, Dy (0.7), and iron, Fe (1.9), having a high magnetostriction of up to 0.001 m/m at saturation, therefore expanding and contracting based on application of a magnetic field. The magnetostrictive member 88 can be mechanically prestressed for orienting the magnetic domains normal to the axis 104 of the rod to maximize displacement in a magnetic field. It will be appreciated that magnetostrictive materials can change shape in a magnetic field as a result of rotation of small magnetic domains, causing internal strains in the material. The material thereby expands in the direction of the magnetic field. With an increase in the magnetic field, further magnetic domains rotate into alignment until magnetic saturation is achieved.

A metal sleeve 106 extends around the magnetostrictive member 88. An inner diameter of the metal sleeve 106 is marginally greater than the outer diameter of the magnetostrictive member 88 and is coaxial with the magnetostrictive member 88 so that the magnetostrictive member 88 is located within the sleeve 106.

The magnetic field applicator 86 generates a magnetic field in which the magnetostrictive member 88 is located for causing expansion of the magnetostrictive member 88 along the direction of the axis. In the present example, the magnetic field applicator 86 is in the form of a series of electromagnetic induction coils 108 wound around the sleeve 106. Electric current flows through the series of electromagnetic induction coils 108 to produce the magnetic field. In the present example, a moving magnetic field that travels through successive windings of the electromagnetic induction coils 108 is employed to cause the magnetostrictive member 88 to elongate in the axial direction and contract again with the passing magnetic field. This traveling magnetic field and elongation and contraction produces motion and force output from the magnetostrictive member 88. The magnitude of motion and force is proportional to the magnetic field provided by the coil, which is a function of the current. It will now be appreciated that the magnetic field applicator 86 in combination with the magnetostrictive member 88 provides an elastic-wave.

A force is applied to the touch-sensitive display 38 by the magnetostrictive member 88 as a result of elongation in the axial direction with the passing magnetic field, causing movement of the touch-sensitive display 38. Thus, with elongation of the magnetostrictive member, a force is applied to the touch-sensitive display 38, which is moved away from the base 82, against the bias of the compliant spacers and is then returned to the rest position shown in Figure 3. In the present example, the actuating arrangement includes two magnetostrictive members 88, each with a respective magnetic field applicator 86. Other numbers of magnetostrictive members 88 with respective magnetic field applicators 86 and alternative locations are possible, however. The magnetostrictive members 88 and respective magnetic field applicators 86 are shown approximately equidistant from a center of the portable electronic device 20. The elongation of each magnetostrictive member 88 can be individually controlled by controlling the respective magnetic field applicator 86. Thus, the resulting movement of the touch sensitive display 38 can also be controlled as the touch-sensitive display 38 can be pivoted as a result of elongation of one of the magnetostrictive members 88 or can be moved away from the base 82 and generally parallel thereto as a result of elongation of both of the magnetostrictive members 88. With the passing of the magnetic field, the magnetostrictive member contracts again and the touch-sensitive display 38 returns to the rest position shown in Figure 3.

The portable electronic device can be controlled by controlling the actuating arrangement 84. For example, when a touch event is determined at the touch-sensitive display 38, each magnetostrictive member 88 can be controlled by controlling the flow of electric current through the series of electromagnetic induction coils 108, thereby controlling the magnetic field, causing movement of the touch-sensitive display 38, providing tactile feedback to the user of the device.

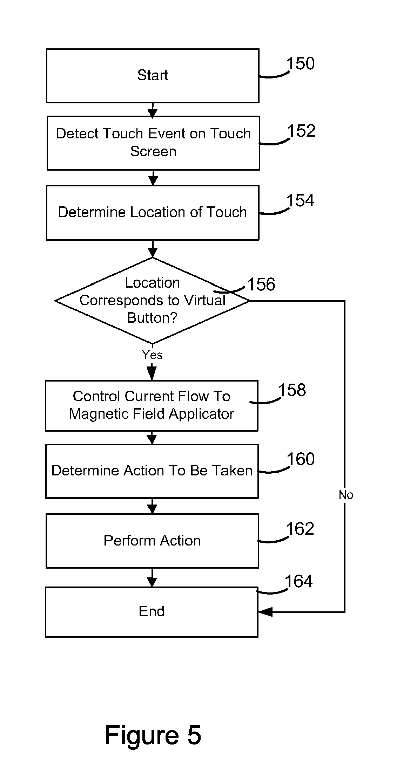

Reference is now made to Figure 5 to describe a method of controlling the portable electronic device 20 according to one embodiment. It will be appreciated that the steps of Figure 5 are carried out by routines or subroutines of software executed by the processor 22. Coding of software for carrying out such steps is well within the scope of a person of ordinary skill in the art having regard to the present description.

The portable electronic device 20 is turned to an on or awake state in any suitable manner (step 150). In the on or awake state, user-selectable features such as icons or virtual buttons or keys are rendered on the touch-sensitive display 38. Such user-selectable features can include, for example, icons for selection of an application for execution by the processor 22, buttons for selection of user options, keys of a virtual keyboard or any other suitable user-selectable icons or buttons.

A touch event is detected upon user touching of the touch-sensitive display 38. Such a touch event can be determined upon a user touch at the touch-sensitive display 38 for selection of, for example, a Internet browser application, an email application, a calendar application, or any other suitable application, option, key or other feature (step 152). The X and Y location of the touch event are determined (step 154) and it is determined if the X and Y location of the touch event correspond to a user-selectable feature (step 156). Thus, it is determined if the X and Y location of the touch corresponds to a user-selectable icon, a virtual button or key or any other suitable feature rendered on the display 32.

If the X and Y location of the touch event corresponds with the location of a user-selectable feature, a voltage is applied causing electric current to flow through the series of electromagnetic induction coils 108 of at least one of the magnetic field applicators 86 to produce the magnetic field, under the control of the processor 22, resulting in a force on the touch-sensitive display 38 (step 158). According to the present example, the actuating arrangement 84 can be controlled such that current flows through the magnetic field applicator 86 that is closest to the location of touch on the touch-sensitive display 38 of the portable electronic device 20 causing application of force by the respective one of the magnetostrictive members 88 to the touch-sensitive display 38. Thus, the touch-sensitive display 38 is pivoted to provide tactile feedback to the user. Alternatively, current can flow through both magnetic field applicators 86 in the exemplary embodiment shown in Figure 2, to cause application of force by both magnetostrictive members on the touch-sensitive display 38, to move the touch-sensitive display generally parallel to the base 82. The resulting moving magnetic field that courses down the windings along the magnetostrictive member 88 causes a force output by the magnetostrictive member 88. The mechanical response time resulting from magnetostriction can be on the order of microseconds, providing tactile feedback to the user.

Next, the user-selection is determined (step 160), based on the X and Y location of the touch. If the touch event corresponds to user-selection of a feature, the action to be taken is determined and the action is performed (step 162). Thus, if user-selection of, for example, an application is determined at step 160, the application is launched at step 162. In an alternative example, if user-selection of a key of a keyboard is determined in, for example, an electronic mail application, at step 160, the corresponding character is added in the mail.

The process ends at step 164. If it is determined at step 156 that the touch location does not correspond to a user-selectable feature on the touch-sensitive display 38, the process ends (step 164).

It will be appreciated that the flow chart shown is simplified for the purpose of explanation. A further touch event can be detected again and steps 152 to 162 can be repeated, for example.

Referring now to Figure 5 and to Figures 1 to 4, a particular example of controlling an electronic device is provided in which a user touching the touch-sensitive display 38 at a user-selectable feature is detected (step 152) and the touch location is determined (step 154). The touch location is then determined to correspond to a user-selectable feature (step 156). Current flows through the electromagnetic induction coils 108 of the magnetic field applicator 86 that is closest to the location of touch to produce the magnetic field, resulting in application of force by the respective magnetostrictive member 88 on the touch-sensitive display 38 (step 158). Thus, when the user touches the touch-sensitive display 38 at the user-selectable feature, the magnetostrictive member 88 applies a force to the touch-sensitive display 38 and the touch-sensitive display 38 is pivoted to provide tactile feedback to the user. Next, the user-selected feature is determined (step 160), based on the X and Y location of the touch and the corresponding action is taken (step 162).

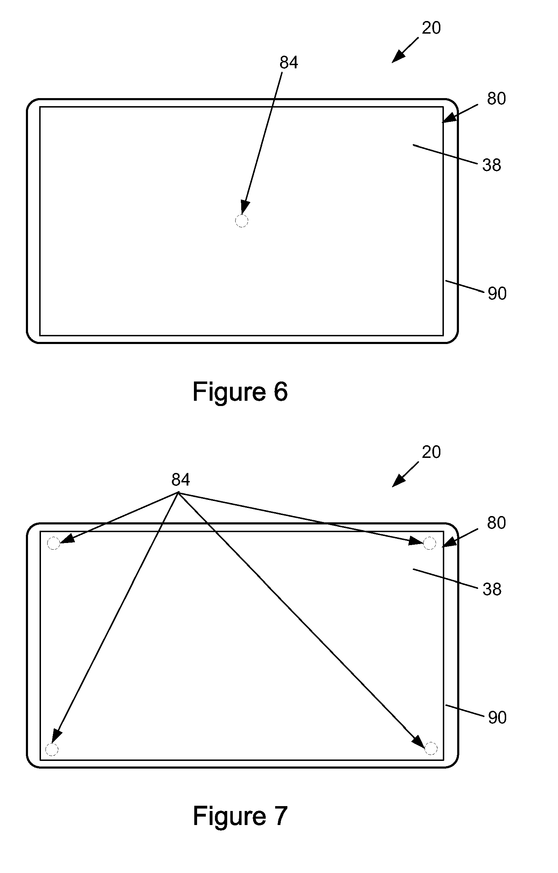

Referring now to Figure 6, a front view of another exemplary portable electronic device 20 in a landscape orientation, showing hidden detail in ghost outline is provided. As shown, the actuating arrangement 84 of the portable electronic device 20 of Figure 6 includes a single magnetostrictive member with a magnetic field applicator located approximately at the center of the touch-sensitive display 38, between the touch-sensitive display 38 and the base (not shown). Although only a single magnetostrictive member and corresponding magnetic field applicator are employed, the operation of the actuating arrangement 84 is similar to that described hereinabove with reference to Figures 2 to 5 and therefore is not further described herein.

Control of the magnetic field applicator and magnetostrictive member provides forces on, and controlled movement of, the touch-sensitive display 38, giving the user desirable tactile feedback upon selection of a feature on the touch-sensitive display 38. The steps of the method of controlling the electronic device as shown in Figure 5 and described above can be carried out using the exemplary touch-sensitive display unit 80 shown in Figure 6. The method described above with reference to Figure 5 is similar and therefore also need not be further described herein.

Referring now to Figure 7, a front view of yet another exemplary portable electronic device 20 in a landscape orientation, showing hidden detail in ghost outline is provided. As shown, the actuating arrangement of the portable electronic device 20 of Figure 7 includes a four magnetostrictive members, each with a respective magnetic field applicator, with each of the magnetostrictive members located proximal a respective corner of the touch-sensitive display 38, between the touch-sensitive display 38 and the base (not shown). Although four magnetostrictive members and corresponding magnetic field applicators are employed, the operation of the actuating arrangement 84 is similar to that described hereinabove with reference to Figures 2 to 5 and therefore is not further described herein.

Control of the magnetic field applicators and magnetostrictive members provides forces on, and controlled movement of, the touch-sensitive display 38, giving the user desirable tactile feedback upon selection of a feature on the touch-sensitive display 38. The steps of the method of controlling the electronic device as shown in Figure 5 and described above can be carried out using the exemplary touch-sensitive display unit 80 shown in Figure 7. The method described above with reference to Figure 5 is similar and therefore also need not be further described herein.

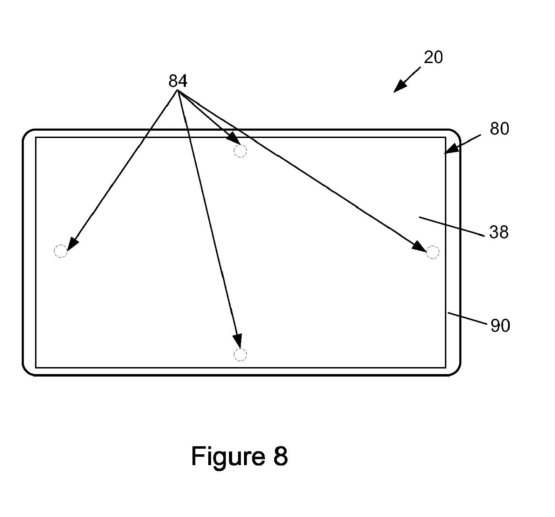

Referring now to Figure 8, a front view of still another exemplary portable electronic device 20 in a landscape orientation, showing hidden detail in ghost outline is provided. As shown, the actuating arrangement of the portable electronic device 20 of Figure 8 includes a four magnetostrictive members, each with a respective magnetic field applicator, with each of the magnetostrictive members located proximal a respective side of the touch-sensitive display 38 and centered along the respective side, between the touch-sensitive display 38 and the base (not shown). Although four magnetostrictive members and corresponding magnetic field applicators are employed, the operation of the actuating arrangement 84 is similar to that described hereinabove with reference to Figures 2 to 5 and therefore is not further described herein.

Control of the magnetic field applicators and magnetostrictive members provides forces on, and controlled movement of, the touch-sensitive display 38, giving the user desirable tactile feedback upon selection of a feature on the touch-sensitive display 38. The steps of the method of controlling the electronic device as shown in Figure 5 and described above can be carried out using the exemplary touch-sensitive display unit 80 shown in Figure 8. The method described above with reference to Figure 5 is similar and therefore also need not be further described herein.

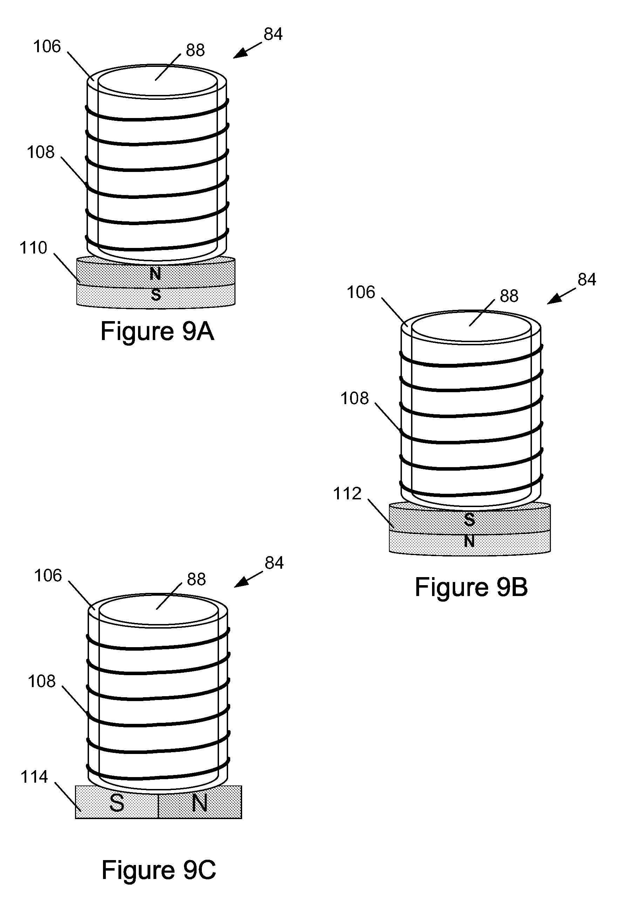

In other embodiments, permanent magnets are disposed in the housing of the portable electronic device such that the magnetostrictive member or members are located in the magnetic field of the permanent magnets. The permanent magnets can be located between the base 82 and the respective magnetostrictive member 88 such that the permanent magnet is located under the magnetostrictive member 88 in the orientation shown in Figure 3. Such permanent magnets can be arranged in any suitable manner as shown in Figures 9A to 9C. Figure 9A shows a perspective view of an exemplary actuating arrangement 84 with a permanent magnet 110 under the magnetostrictive member 88, metal sleeve 106, and electromagnetic induction coils 108. Figure 9B shows a perspective view of an exemplary actuating arrangement 84 with a permanent magnet 112 shown oriented in a different direction for providing an alternative bias. The permanent magnet 112 is again shown under the magnetostrictive member 88, metal sleeve 106, and electromagnetic induction coils 108. Figure 9C shows an exemplary actuating arrangement 84 with a permanent magnet 114 oriented in yet a different direction for providing an alternative bias. The permanent magnet 114 is again shown under the magnetostrictive member 88, metal sleeve 106, and electromagnetic induction coils 108 for exemplary purposes.

The permanent magnets partially magnetically bias the magnetostrictive member or members into the middle of the linear strain region of the material, thereby decreasing electrical requirements for actuation and increasing sensitivity of the magnetostrictive member to an applied magnetic field from the magnetic field applicator or applicators. Further, the magnetic field applicators can add to the magnetic bias from the permanent magnets or can subtract from the magnetic bias from the permanent magnets, causing the magnetostrictive member to elongate or contract in the axial direction. Thus, the magnetostrictive member can elongate as described above, or can contract in the axial direction as a result of the magnetic field caused by the flow of current at step 158 of Figure 5. Contraction of the magnetostrictive member permits movement of the touch-sensitive screen toward the base as a result of pressure applied by the user.

The actuating arrangement can be controlled to apply force to the touch-sensitive display 38 such that controlled, desirable tactile feedback is provided upon detection of a touch-input at the touch screen display. Thus, tactile feedback can be controlled such that touching the touch-sensitive display 38 at an area that does not correspond to a virtual button or feature, for example, does not result in provision of tactile feedback. On the other hand, touching the touch-sensitive display at an area that corresponds to a virtual button or feature results in provision of such tactile feedback. Further still, the tactile feedback can be controlled such that different feedback is provided for different user-selectable features on the touch-sensitive display or for different areas of the touch-sensitive display, for example.

The actuating arrangement provides a fast response time driven by a relatively low voltage of, for example, 10V to provide desirable tactile feedback. Further, the feedback can be controlled by controlling the current flow through the magnetic field applicator. The force and displacement is thereby controlled for actuation, providing high force and displacement of the touch-sensitive display.

While the embodiments described herein are directed to particular implementations of the portable electronic device and the method of controlling the portable electronic device, it will be understood that modifications and variations may occur to those skilled in the art. All such modifications and variations are believed to be within the sphere and scope of the present disclosure.

## Claims

1. A touch screen display unit comprising:
a base;
a touch-sensitive display comprising a display device and a touch-sensitive overlay connected to a controller and disposed on the display device for detecting a touch event thereon, the touch-sensitive display connected to and moveable relative to the base; and
an actuating arrangement between the touch-sensitive display and the base, the actuating arrangement comprising a magnetic field applicator for controlling application of a magnetic field and a magnetostrictive member for changing shape in the magnetic field for movement of the touch-sensitive display relative to the base in response to detection of the touch event.

2. The touch screen display unit according to claim 1, wherein said magnetic field applicator comprises an electromagnetic induction coil extending around the magnetostrictive member.

3. The touch screen display unit according to claim 2, wherein the magnetostrictive member comprises a magnetostrictive rod configured to change length in response to application of the magnetic field.

4. The touch screen display unit according to claim 3, comprising a sleeve surrounding said magnetostrictive rod and having an inner diameter larger than an outer diameter of said magnetostrictive rod.

5. The touch screen display unit according to claim 3 or claim 4, wherein the magnetostrictive member comprises Terfenol-D.

6. The touch screen display unit according to any one of claims 3 to 5, wherein said magnetostrictive member is mechanically pre-stressed for orienting magnetic domains normal to an axis of the rod.

7. The touch screen display unit according to claim 1, comprising permanent magnets located for providing a magnetic field at the magnetostrictive member for partially magnetically biasing the magnetostrictive member.

8. The touch screen display unit according to any one of the preceding claims, wherein the magnetostrictive member is laminated for reducing eddy currents in the magnetostrictive member.

9. The touch screen display unit according to any one of the preceding claims, wherein said actuating arrangement comprises a plurality of magnetostrictive members and a plurality of respective magnetic field applicators.

10. A portable electronic device comprising:
a touch screen display unit as claimed in any one of claims 1 to 9; and
operational components comprising a processor connected to the controller and to the magnetic field applicator for controlling application of said magnetic field based on the touch event.

11. A method of controlling the portable electronic device of claim 10, the method comprising:
detecting a touch event at the touch-sensitive display; and
based upon the detected touch event, applying a voltage to the magnetic field applicator for application of the magnetic field to the magnetostrictive member to cause movement of the touch screen display relative to the base.

12. The method of claim 11, wherein detecting the touch event at the touch-sensitive display includes:
detecting a touch event at a user-selectable feature area displayed on the touch screen display; and
detecting a touch event at a user-non-selectable area on the touch screen display.

13. The method of claim 12, further comprising:
if a touch event at a user-non-selectable area is detected, refraining from applying a voltage to the magnetic filed applicator.

14. A computer-readable medium having computer-readable code embodied therein for execution by the processor of the portable electronic device according to claim 10 for causing said portable electronic device to implement the steps of the method of any one of claims 11 to 13.

## Amended claims

### Amended claims in accordance with Rule 137(2) EPC.

**1.** A touch screen display unit (80) comprising:
a base (82);
a touch-sensitive display (38) comprising a display device (32) and a touch-sensitive overlay (34) connected to a controller and disposed on the display device (32) for detecting a touch event thereon, the touch-sensitive display (38) connected to and moveable relative to the base (82); and
an actuating arrangement (84) between the touch-sensitive display (38) and the base (82), the actuating arrangement (84) comprising a magnetic field applicator (86) for controlling application of a magnetic field and a magnetostrictive member (88) for changing shape in the magnetic field for movement of the touch-sensitive display (38) relative to the base (82) in response to detection of the touch event.

**2.** The touch screen display unit (80) according to claim 1, wherein said magnetic field applicator (86) comprises an electromagnetic induction coil (108) extending around the magnetostrictive member (88)

**3.** The touch screen display unit (80) according to claim 2, wherein the magnetostrictive member (88) comprises a magnetostrictive rod configured to change length in response to application of the magnetic field.

**4.** The touch screen display unit (80) according to claim 3, comprising a sleeve (106) surrounding said magnetostrictive rod and having an inner diameter larger than an outer diameter of said magnetostrictive rod.

**5.** The touch screen display unit (80) according to claim 3 or claim 4, wherein the magnetostrictive member (88) comprises Terfenol-D.

**6.** The touch screen display unit (80) according to any one of claims 3 to 5, wherein said magnetostrictive member (88) is mechanically pre-stressed for orienting magnetic domains normal to an axis of the rod.

**7.** The touch screen display unit (80) according to claim 1, comprising permanent magnets (110, 112) located for providing a magnetic field at the magnetostrictive member (88) for partially magnetically biasing the magnetostrictive member (88).

**8.** The touch screen display unit (80) according to any one of the preceding claims, wherein the magnetostrictive member (88) is laminated for reducing eddy currents in the magnetostrictive member (88).

**9.** The touch screen display unit (80) according to any one of the preceding claims, wherein said actuating arrangement (84) comprises a plurality of magnetostrictive members (88) and a plurality of respective magnetic field applicators (86).

**10.** A portable electronic device (20) comprising:
a touch screen display unit (38) as claimed in any one of claims 1 to 9; and
operational components comprising a processor (22) connected to the controller and to the magnetic field applicator (86) for controlling application of said magnetic field based on the touch event.

**11.** A method of controlling the portable electronic device (20) of claim 10, the method comprising:
detecting a touch event at the touch-sensitive display (38); and
based upon the detected touch event, applying a voltage to the magnetic field applicator (86) for application of the magnetic field to the magnetostrictive member (88) to cause movement of the touch screen display (38) relative to the base (82).

**12.** The method of claim 11, wherein detecting the touch event at the touch-sensitive display (38) includes:
detecting a touch event at a user-selectable feature area displayed on the touch screen display unit (80); and
detecting a touch event at a user-non-selectable area on the touch screen display unit (80).

**13.** The method of claim 12, further comprising:
if a touch event at a user-non-selectable area is detected, refraining from applying a voltage to the magnetic filed applicator (86).

**14.** A computer-readable medium having computer-readable code embodied therein for execution by the processor (22) of the portable electronic device (20) according to claim 10 for causing said portable electronic device (20) to implement the steps of the method of any one of claims 11 to 13.
